# EUROPEAN PATENT SPECIFICATION

(11) **EP 4 593 585 B1**
(45) Date of publication and mention of the grant of the patent: **26.08.2026**
(21) Application number: 23783003.9
(22) Date of filing: 18.09.2023
(51) Int. Cl.: A01G 33/00, A01C 1/00

(54) **A RIG FOR USE IN GROWING SEAWEED AND A METHOD OF OPERATING SUCH A RIG**
TAKELAGE ZUR VERWENDUNG BEIM ZÜCHTEN VON ALGEN UND VERFAHREN ZUM BETRIEB SOLCH EINER TAKELAGE
APPAREIL DE FORAGE DESTINÉ À ÊTRE UTILISÉ DANS LA CULTURE D'ALGUES ET PROCÉDÉ DE FONCTIONNEMENT D'UN TEL APPAREIL DE FORAGE

(30) Priority: 26.09.2022 GB 202214031
(43) Date of publication of application: 06.08.2025
(73) Proprietor: Seaweed Generation Ltd, Falmouth, Cornwall TR11 3HQ (GB)
(72) Inventor: ESTRIDGE, Patricia, Falmouth, Cornwall TR11 3HQ (GB)
(74) Representative: Sirius IP
(86) International application number: PCT/GB2023/052413
(87) International publication number: WO 2024/069127

(56) References cited:
- WO-A1-2020/127921
- CN-U- 213 907 884
- KR-B1- 101 974 403
- US-A1- 2007 193 115

## Description

### Field

The present application relates to a rig for use in growing seaweed and to a method of operating such a rig.

### Background

Seaweed is utilised for a number of purposes, including as food for human consumption, as animal feed, as a fertiliser, and so on. Such seaweed can be collected (harvested) from wild seaweed or cultivated (farmed) using specific facilities. The production of seaweed compared with other (terrestrial) crops has the advantage that most, just over 70%, of the earth's surface is water rather than land. In addition, while there is significant competition for land resources, such as housing, recreation, infrastructure, and general farming, there is much less competition for such resources at sea.

The demand for seaweed has risen over recent years, leading to an increase in the cultivation of seaweed. This rising demand reflects growth in existing uses of seaweed, for example, as the world population grows, there are more mouths to feed. In addition, new potential uses of seaweed are also being identified, for example, there is now interest in the use of seaweed for carbon sequestration, as discussed in "Sequestration of macroalgal carbon: the elephant in the Blue Carbon room" by Krause-Jensen et at, in Biological Letters, 14, 20180236; "Substantial role of macroalgae in marine carbon sequestration" by Krause-Jensen and Duarte, pages 737-742 in Nature Geoscience, volume 9, October 2016; and "Testing the climate intervention potential of ocean afforestation using the Great Atlantic Sargassum Belt" by Bach et al, published on-line in Nature Communications, 7 May 2021, as well as: "Removing 10 Gigatons of Carbon Dioxide" by Tim Flannery, see https://www.youtube.com/watch?v=SRVnitJlr2c.

By way of further background, .an article "The plans for giant seaweed farms in European waters" by Tristen Taylor, available from https://www.bbc.co.uk/news/business-62407504, notes that the global market for seaweed is now worth around $40 billion annually. This article describes various plans and proposals for increasing the cultivation of seaweed in Europe. One of the challenges faced is how to develop seaweed farming in a manner which is economically efficient as well as environmentally sustainable.

### Summary

The invention is defined by the appended claims.

A rig is provided for cultivating seaweed. The rig comprises a pump and a disk formed at least in part from expandable pipes. In operation, the pump is configured to provide a flow of water through the expandable pipes. This causes the expandable pipes to maintain an expanded condition so as to create a framework for supporting seaweed which is being cultivated on the rig.

In addition, a method is provided for operating a rig (such as the above rig) for cultivating seaweed. The rig comprises a pump and a disk formed at least in part from expandable pipes. The method comprises operating the pump to: (i) maintain the pipes in an expanded condition, by providing water from the pump, when supporting seaweed under cultivation on the rig; and (ii) maintain the pipes in an unexpanded condition, by not providing water from the pump, when performing an operation such as transporting, installing and/or storing the disk.

### Brief Description of the Figures

Various implementations of the claimed invention will now be described by way of example only with reference to the following drawings.
Figure 1 is a schematic representation of an example of a rig as disclosed herein.
Figure 2 is a schematic representation of an example of a disk included in the rig shown in Figure 1.
Figures 3A and 3B provide schematic representations of an example pipe (tube) of the disk of Figure 2, with Figure 3A showing the pipe in unexpanded form and Figure 3B showing the pipe in expanded form.
Figure 4 is a schematic representation of a rig as disclosed herein, similar to the rig shown in Figure 1 but with some additional features.
Figure 5 is a schematic representation of an example of a disk included in the rig shown in Figure 1, similar to the disk shown in Figure 2 but with some additional features.
Figure 6 is a schematic representation showing an example of an array of rigs, the rigs being implemented, for example, based on the example of Figure 1.

### Detailed Description

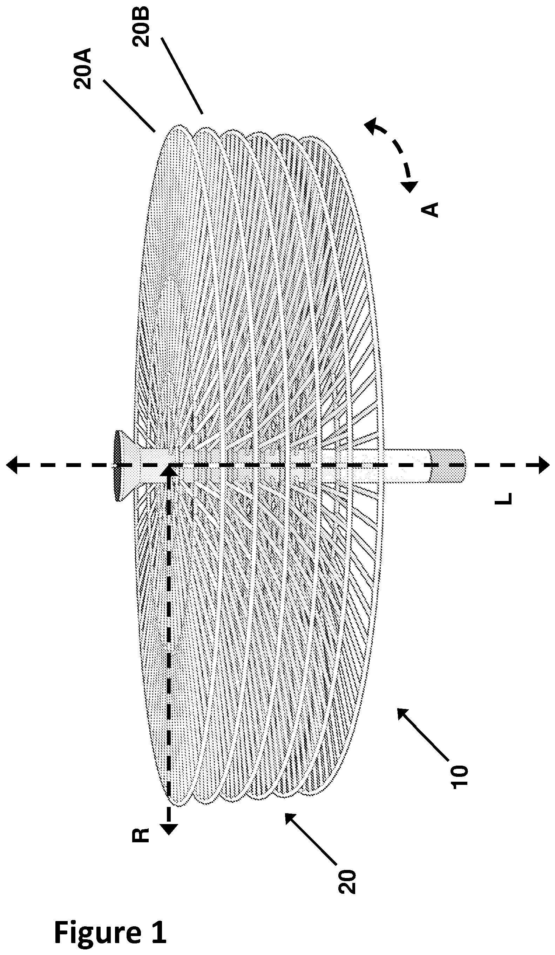

As shown in Figure 1, a rig 10 is disclosed for use in growing (cultivating) seaweed. The rig is primarily intended for use in a marine environment, such as in the sea or ocean, but could be used in any other suitable environment, such as lochs or fiords, estuaries, and so on. The rig 10 comprises one or more disks 20 stacked one on top of another. Figure 1 shows a rig 10 comprising six disks, two of which are indicated as disks 20A and 20B, however, other implementations may use a different number of disks. By way of example, the rig 10 may be used for growing red and brown seaweeds, such as sugar kelp, however, the rig may be used for growing any other suitable seaweed (or other marine vegetation) according to farm location, customer demand, and so on.

Figure 1 further illustrates three axes, L, R and A for use in the description of the rig 20. The longitudinal (L) axis (also referred to as the axial direction) passes through the centre of each disk in a direction perpendicular to the plane of each disk 20A, 20B, etc. Accordingly, as shown in Figure 1, the discs 20 are parallel with one another, with their centres aligned and spaced along the longitudinal axis. Note that in operational use of the rig 10 in the sea, the longitudinal axis L is aligned in a vertical direction, so that disk 20B is directly below disk 20A, and so on down through the rig 10 in the longitudinal direction.

The radial axis (R) extends in a perpendicular direction to the longitudinal axis. Thus in normal operational use, the radial axis has a horizontal configuration, parallel to the planar surfaces of the disks 20. The azimuthal axis (A) is also defined in a plane perpendicular to the longitudinal axis, and hence is also parallel to the planar surfaces of the disks 20 in normal operational use. Whereas the radial axis is used to measure radial distance from the longitudinal axis (and hence from the centre of the disks), the azimuthal axis (also referred to as the circumferential direction) measures angle around the longitudinal axis.

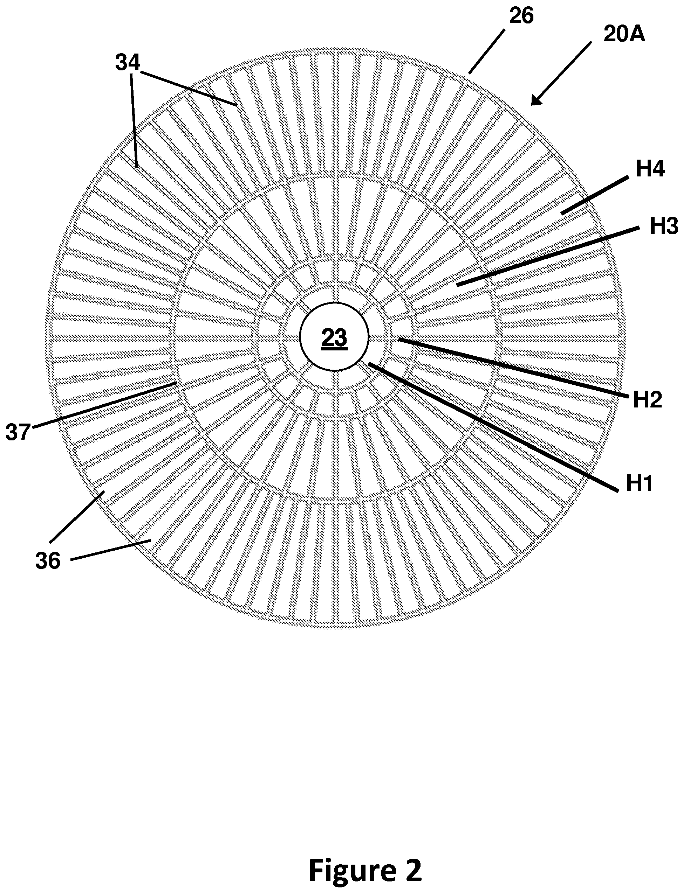

Figure 2 is a schematic representation of an example of a disk 20A included in the rig 10 shown in Figure 1. The disk 20A includes a central (inner) portion 23, which is described in more detail below, and an outer circumference 26. The disk 20A further comprises a network (framework) of tubes or pipes. The tubes/pipes can be divided into two different categories: (i) those directed radially, see the examples denoted with reference numeral 34, and (iii) those directed azimuthally (circumferentially), see the example denoted with the reference numeral 37. Typically, all the disks 20 in rig 10 may have the same configuration of tubes/pipes as each other (and such as shown in Figure 2), although in other implementations, there may be some variation between the different disks 20 in a rig 10.

The regions between the pipes, see the examples denoted with reference numeral 36, are spacings, somewhat analogous to the gaps between spokes of a wheel. This allows the framework of disk 20A to provide a structure to support the cultivation of seaweed on the rig 10. In particular, the seaweed as it grows is able to penetrate through the gaps 36, in effect to attach to (and be retained by) the framework of the disk 20A.

The pipe framework of the disk 20A shown in Figure 2 has a hierarchical arrangement, with four levels of hierarchy labelled H1, H2, H3 and H4. Each hierarchical level comprises a concentric, circular band within the disk 20A. Each band (ring) extends from an inner circle of azimuthally (circumferentially) directed tubes to a corresponding outer circle of azimuthally (circumferentially) directed tubes, with the exception that the first level (ring) H1 extends out from the centre 23 of the disk 20A, while the band of the final (fourth) level H4 extends to the outer circumference 26 of the disk 20A. Each band comprises a set of radially directed tubes which are azimuthally distributed around the respective band.

In the example of Figure 2, the angular spacing of radially directed pipes is fixed (constant) within a given ring or level, but this angular spacing decreases for rings (hierarchical levels) that are further out from the centre 23. Accordingly, the angular spacing of the radially directed pipes is greatest for level (ring) H1, and decreases for each of levels H2, H3 and H4 in turn. This configuration reflects in part the use of bands H3 and H4 as the primary portions of the disk 20A for growing seaweed. Likewise, bands H3 and H4 also have a greater radial extent than bands H1 and H2, again in part because these bands H3 and H4 provide the primary portions of the disk 20A for growing seaweed.

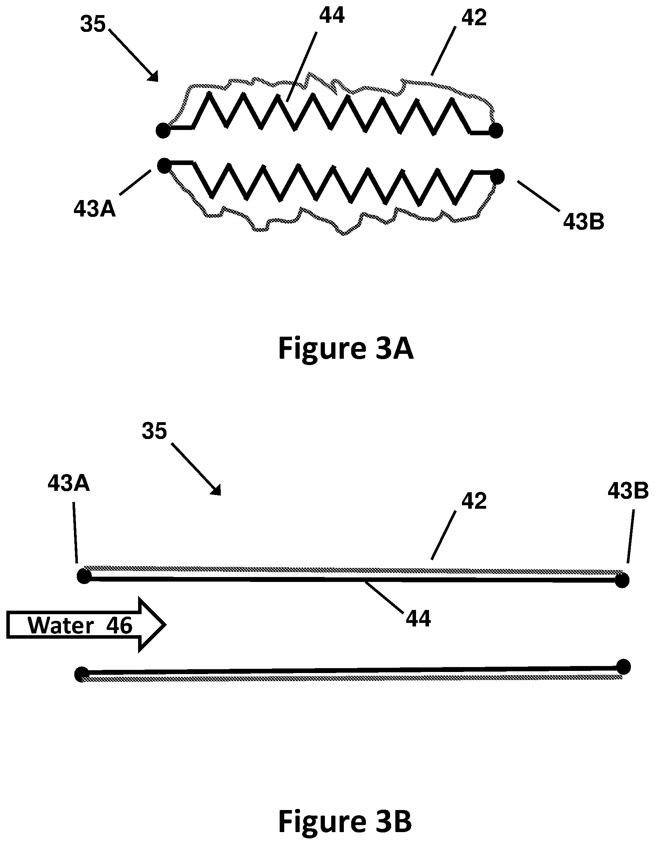

Figures 3A and 3B provide schematic, cross-sectional, representations of an example pipe (tube) 35 of the disk 20A of Figure 2, with Figure 3A showing the pipe in unexpanded form and Figure 3B showing the pipe in expanded form. The unexpanded form of the pipe shown in Figure 3A represents the state of the pipe when no water is flowing through the pipe 35, while the expanded form of the pipe shown in Figure 3B represents the expanded state of the pipe when water is flowing through the pipe 35, as indicated by the arrow corresponding to water 46.

As shown in Figure 3A, the pipe 35 has the basic form of a hollow tube, with an inlet 43A at one end of the pipe (shown to the left in Figure 3A) and an outlet 43B at the opposing end of the pipe (shown to the right in Figure 3B). The path from the inlet 43A to the outlet 43B can be considered as the axial direction of the pipe 35. The pipe 35 typically has (approximate) rotational symmetry about this axial direction, with an approximately circular cross-section perpendicular to the axial direction (although other implementations might potentially have a different cross-sectional shape).

The pipe 35 comprises an inner wall 44 and an outer wall 42. The inner and outer walls both extend from the inlet 43A to the outlet 43B. In addition, the inner and outer walls are connected to each other at both the inlet 43A and the outlet 43B. However, the inner and outer walls 42, 44 are not connected to each other between the inlet 43A and the outlet 43B, rather the intervening portions of the inner and outer walls 42, 44 (i.e. the portions between the inlet 43A and the outlet 43B) are able to translate with respect to one another.

The inner wall 44 is typically made of a waterproof, resilient (elastic) material such as rubber (or a synthetic material having similar properties to rubber). Figure 3A shows the inner wall in its unexpanded (rest or relaxed) form, when no water is flowing through the pipe 35. In particular, the inner wall 42 has a concertina (zig-zag) configuration (but other implementations may have a different relaxed configuration, not necessarily zig-zag).

The outer wall 42 typically comprises some woven or braided textile formed from artificial fibres such as nylon. The outer wall is not resilient or elastic, in the sense that it can resist tension, but not other forms of deformation (such as compression or bending). In addition, the inner wall, being elastic, may deform from a rest shape in response to an applied force, but will return to the rest shape when the applied force is removed. In contrast, the outer wall 42 may deform from an initial shape if there is an applied force, but generally will not return to the initial shape when the applied force is removed. Accordingly, the outer wall 42 is shown in Figure 3A as having a wiggly and somewhat arbitrary (loose) shape which will depend, inter alia, upon the current orientation of the pipe 35. In the unexpanded (relaxed) configuration of the inner wall 44 shown in Figure 3A, the outer wall 42 does not exert any significant force on the inner wall 44 (and vice versa). Rather, as mentioned above, the inner wall 44 and outer wall 42 can generally move freely with respect to one another.

Referring now to Figure 3B, this illustrates the pipe 35 in expanded form, with water 46 flowing through the pipe. The pressure of the water 46 on the inner wall 44 has expanded the inner tube, firstly by flattening out the zig-zag, and then by further expansion of the inner wall in both the radial and axial directions. As shown in Figure 3B, the inner and outer walls are now shaped into concentric cylinders, with the inner wall 44 abutting directly against the outer wall 42.

Further expansion of the inner wall 44 is limited in both directions by the outer wall 42. In particular, any looseness associated with the outer wall 42 in the unexpanded configuration (such as shown in Figure 3A) is now taken up to accommodate the expansion of the inner wall 44. When no more looseness (slack) remains, further radial expansion of the inner wall 44 is prevent by tension within the outer wall 42. In other words, because the outer wall 44 is not resilient or elastic (or only marginally so compared with the inner wall) the inner wall 44, driven by the pressure of water flow 46 through the pipe 35, is now unable to overcome the tension in the outer wall to push the outer wall 42 any further outwards in a radial direction.

Regarding the axial direction, it can be seen in Figure 3B that the separation of the water inlet 43A from the water outlet 43B has increased compared to the separation shown in Figure 3A, thereby increasing the effective length of the pipe 35. This increase in length can again be seen as taking up any slackness or looseness in the outer wall 42. However, when there is no more remaining slackness, the outer wall 42 now comes under tension (in the axial direction) and so prevents any further (axial) expansion of the inner wall 44 to increase the separation between the water inlet 43A from the water outlet 43B

(Note that although Figure 3B shows the water inlet 43A and water outlet 43B both expanding in line with the inner wall 44, in other implementations the water inlet 43A and/or water outlet 43B may be of fixed size. In such implementations, the intervening portions of the pipe 35 are still able to expand in the radial direction as shown in Figure 3B).

The pipe 35 therefore has an unexpanded (rest) state shown in Figure 3A when the pipe is not in operation for the transmission of water, and an expanded state shown in Figure 3B, when the pipe is in operation for supplying water through the pipe 35. The rest state of the pipe 35 is therefore relatively compact, thereby making the pipe easier to store and move from one site to another. In the expanded state, the pipe is longer, wider and typically more rigid (compared to the unexpanded state). The increase in the length of pipe 35 from the unexpanded state to the expanded state is typically by a factor of between 1.3 and 6, for example, by a factor in the range 2 to 4, or 1.5 to 3, or 3 to 5, or any combination thereof.

In high-level terms, the pipe 35 is broadly similar in design to some garden hosepipes which likewise have an inner and an outer wall and transition between an unexpanded state and an expanded state. It will be appreciated that various aspects of such hosepipes may be applied as appropriate to pipe 35 of the present application (having regard to the differences in context of use and overall structure).

Returning to Figure 2, a pump may be located in the centre 23 of the disk 20A (as described in more detail below). The pump may be configured to draw water from the surrounding environment, such as the sea in which the rig 10 is located, and to pump this water through the network of pipes shown in Figure 2. The water then exits the disk 20A through suitable holes (not shown) which are typically provided in the circumference 26 of disk 20A (and usually elsewhere as well, as discussed below.

In some implementations, all the pipes shown in Figure 2 may have the structure of pipe 35 as described above with reference to Figures 3A and 3B. In other implementations, only certain pipes may have the structure of pipe 35, with the remaining pipes being provided (for example) as fixed conventional pipes. For example, one possibility is for rings H1 and H2 to be implemented using conventional fixed pipes, with the pipes in rings H3 and H4 then being implemented using the type of pipe 35 shown in Figures 3A and 3B. One potential reason for this approach would be rings H3 and H4 provide the main growing area for seaweed, whereas rings H1 and H2 are more related to the overall structure and operation of the rig 10.

Another possibility is that one or more of the azimuthally directed pipes 37 are based on conventional pipes, whereas the radially directed pipes 34 are implemented using the pipes 35 as shown above in Figures 3A and 3B. One potential reason for this approach would be that the pumped water flow has a generally radial direction (rather than an azimuthal direction). Note however that even if azimuthally directed pipes 37 do not have the configuration of pipe 35 shown in Figures 3A and 3B, the azimuthally directed pipes 37 should possess appropriate flexibility (and/or elasticity) to accommodate and expansion in length of the radially directed pipes 34, since such expansion would tend to increase also the divergence (angular separation) between the radially directed pipes 34 which is to be bridged by the azimuthally directed pipes 37.

It will be appreciated that the various configurations described above for the pipes within disk 20A are provided by way of example, and many other configurations may be adopted according to the circumstance of any given implementation. Such other configurations may utilise combinations of the arrangements described above, and/or may incorporate further features as apparent to the skilled person.

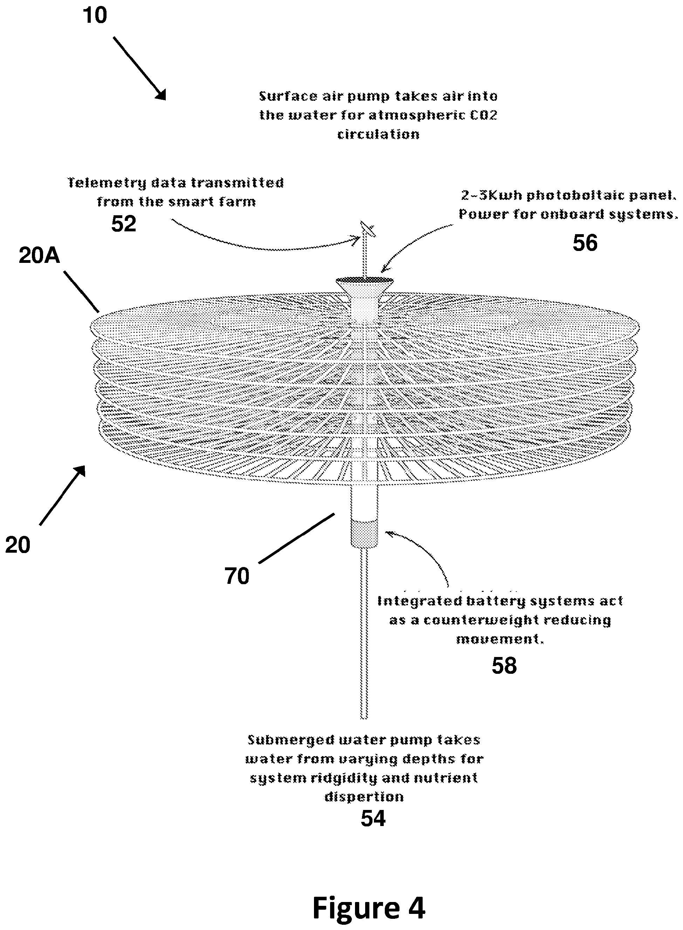

Figure 4 is a schematic representation of a rig 10 as disclosed herein. The rig of Figure 4 is similar to the rig shown in Figure 1, but incorporates some additional features which were omitted from Figure 1 for ease of presentation. The rig of Figure 4 includes 6 disks 20, each of which represents a layer to support the cultivation of seaweed on the rig, although it will be appreciated that other implementations may have more or fewer disks (layers). Furthermore, it will be understood that although the disks 20 shown in Figure 4 are circular in shape, the layers (disks) may have a different shape, such as square, rectangular or hexagonal, according to the requirements of any given rig 10. In addition, although the disks 20 in rig 10 are substantially all the same as one another, in other implementations the disks in a given rig 10 may be different from one another, such as in size, shape or structure. Such differences might occur, for example, to reflect the different depths at which the different individual disks are operated, or possibly a rig is used to grow different types of seaweed on different disks

In the implementation of Figure 4, the disks 20 may each have a diameter of approximately 50m, which provides a growing surface of approximately 3500m² per disk 20 (counting both the top and bottom surfaces of the disk). In other implementations, the size of each layer may be smaller or larger, for example, in the range 10-100m, 10-25m, 20-50m, 25-60m, or any combination thereof. An individual disk 20 having such a growing surface of approximately 3500m² may have a capability of producing of the order of 500-1000 tonnes of biomass per annum and a maximum CO2 absorption of the order of 100-150 tonnes per annum. (It will be appreciated that these amounts are dependent on various factors such as location of the rig and growing conditions at that location).

The rig 10 shown in Figure 4 further includes a column 70 which extends through the centres 23 of the disks 20. The disks 20 may be fastened to the column 70 in order to position and secure them within the rig 10. In some implementations, the column 70 may be extendable, for example, to provide a greater spacing between the disks 20 (layers), which may be desirable in some circumstances, for example to provide increased growing space as the seaweed matures. The column 70 also provides and/or supports various functionality relating to the operation of the rig 10. The functionality of the column 70 is generally shared between all the disks (layers) 20 provided on a given rig 10 - for example, all the disks 20 utilise the same antenna(s) 52 (as described below) for communications with a control station.

The column 70 may have a facility to expand and contract, for example by using some form of telescopic arrangement. When the column 70 is in the contracted form, the longitudinal spacing between the layers (disks 20) is relatively low; conversely, if the column 70 is in an expanded form, the longitudinal spacing between the disks is relatively high. This facility of changing the spacing between the disks may be used for a variety of purposes. For example, if a disk supports a new growth of seaweed, the plants are relatively small, and so the disks can be positioned with relatively lower spacing. However, if a disk supports more mature seaweed, the plants are relatively larger and so the disks 20 may have a greater spacing. It will also be appreciated that a greater spacing between the disks 20 will expand (lengthen) the column 70 and so require a greater depth of water to accommodate the rig, whereas a lower disk spacing would allow a rig to be operated in a shallower environment.

In operation, the column 70 adopts a generally longitudinal (vertical) orientation. At the lower end of the column 70 is a pump 54 which draws in water from generally below the rig 10 and impels this water out through pipes 35 to maintain the pipes in an expanded form and hence provide the structural framework for the rig 10 as a whole. In addition, this pumping action 54 has the effect of drawing in nutrients from the sea below the rig and then distributing the nutrients across the seaweed growing on the rig using substantially the same water flow that maintains the pipes 35 in expanded form.

This additional use of the pumped water to distribute nutrients to the growing seaweed may impact how the pumped water is released from the pipes 35. For example, as well as providing water outlets from the pipes on the circumference 26 of a disk 20A, there may also be some water outlets radially inwards of the circumference to provide a supply of water across the portions of the disk which are used for growing seaweed, such as regions H3 and H4. In such a case, there may be outlets provided from the pipes at the outer radial circumference of regions H2 and H3 to provide a supply of water to growing regions H3 and H4. Note however that a proportion of pumped water will generally exit the pipes 35 at the circumference of the disk 20A to maintain the shape and rigidity of the overall rig 10. It will be appreciated that the above configuration is provided by way of example only, and many other configurations of water output from the pipes 35 may be used to support the dual objectives of maintaining hydrostatic structure and directing the nutrients to the seaweed which is being cultivated on the rig 10.

The intake for the water pump 54 may extend downwards below the rig 10 to a greater depth of water (compared with the depth of the main volume of the rig). For example, the intake for the water pump may be located at least 2m, 5m, 10, or 15m below the lowest disk 20, or in the range 2-5m or 5-10m below the lowest disk. The water at this depth may have a greater level of nutrients, which can then be used to support greater cultivation of the seaweed with enhanced yield. In addition, the water drawn up by the water pump 54 from a greater depth will generally be cooler (lower in temperature) than the water at or near the surface of the water, where the disks 20 of the rig are located. Note that the solubility of carbon dioxide (and most other gases) increases with lower water temperatures. Accordingly, by using the water pump 54 to drawn up colder water from a greater depth below the rig 10, this water can be aerated using the air pump to hold a greater amount of carbon dioxide (compared with the capacity of warmer water from a lesser depth). When this aerated water is then distributed to the seaweed growing on the rig 10, this increased level of carbon dioxide supply can again support greater cultivation (enhanced yield) for the seaweed being farmed.

At the top of the column 70 is an antenna 52 (or potentially multiple antennas) to provide a communications (telemetry) facility for interactions between the rig 10 and a (typically remote) control station (not shown in Figure 4). The control station may be located, for example, on-shore and/or or on some vessel which is used to manage the rig 10. The antenna 52 may also be used for receiving other communications or information, such as broadcast weather forecasts, or global positioning system (GPS) signals (and/or any other similar location service) to allow the position of the rig 10 to be tracked.

In some implementations, the rig 10 may be provided with some form of motor (not shown in Figure 4) which may be powered, for example, by solar (photovoltaic) cells 56 as described below. The rig 10 may be self-positioning and monitor its own position against an instructed location. The on-board control systems of the rig may then operate the motor(s) to move the rig 10 back to the instructed location if it has drifted away from this location.

Typically the antenna 52 is located above the surface of the water to provide communications to and from the rig 10. In some implementations, the antenna 52 may be positioned or extended upwards from the position on the rig shown in Figure 4 to retain an active communications facility even if the main body of the rig 10 itself is submerged (such as to provide protection against bad weather conditions).

The communications (telemetry) facility such as provided by antenna 52 may be used to support remote monitoring and management of the rig 10 by the control station(s) mentioned above. For example, the rig 10 may use the communications facility to report various information about the rig 10 to the control station. The information may comprise (for example) environmental data relating to the rig 10a and/or operational data relating to the rig 10, such as a log of actions performed by the rig 10 and/or information about the tracked location of the rig 10. By way of example, the environmental data reported by the rig 10 may be obtained from sensors (not shown in Figure 4) located on the rig 10 to make measurements of parameters such as the salinity and temperature of the sea around the rig.

The rig 10 may also use the communications facility provided by antenna 52 to receive management data from the control station for implementation by the rig 10. This management data may comprise, for example, software updates to be deployed on the rig 10 and/or instructions to specify future operation of the rig 10 (such as to change the depth of the rig dependent upon the best availability of nutrients). The management data might also comprise environmental data available to the control station, such as weather forecasts, which can be provided to the rig 10 and used by the rig 10 itself to determine and implement any appropriate actions, such as (temporarily) submerging the rig 10 to a greater depth if a spell of bad weather is expected.

The column 70 of the rig 10 further includes an air pump (not specifically shown in Figure 4). The air pump draws in air from the atmosphere (above the sea) and uses this to aerate the flow of water provided by the (water) pump 54 which is used to maintain the pipes 35 (and hence the rig 10) in the expanded state. The aerated water is then expelled from the pipes 35 of the rig 10 to flow past the seaweed being cultivated on the rig 10, thereby allowing the seaweed to extract carbon dioxide from the aerated water for use in photosynthesis by the seaweed growing on the rig 10. In other implementations, the air pump may directly use the air drawn down from the atmosphere to aerate the water around the seaweed (separately from the operation of the water pump and pipes 35 to maintain the expanded state of the rig 10). Another possibility is to omit the air pump, since there is already some natural aeration of the sea water from the atmosphere which can be used to support growth of seaweed on rig 10. However, using an air pump helps to increase the aeration of the water with carbon dioxide and may also be used to provide control over the distribution of the aeration across the growing seaweed, both of which may help to support faster growth and/or higher yield of the sea weed.

Air drawn in by the air pump may also be retained within the column 70 to provide a form of buoyancy control for the rig - for example, the rig may want to move vertically, such as by rising to provide exposure of the solar panels 56 (see below) to solar radiation (sunlight) or by falling to avoid bad weather. Any other appropriate form of known buoyancy control may also, or alternatively, be provided on rig 10.

It will be understood that the absorption of atmospheric carbon dioxide by the seaweed growing on the rig supports the use of rig 10 as a facility to reduce atmospheric carbon dioxide. For example, by sinking seaweed that has absorbed the carbon dioxide from the atmosphere, this carbon dioxide does not re-enter the atmosphere but rather is sequestered at the bottom of the sea.

Like the antenna 52, the air pump is generally located above the surface of the water to allow the pump access to air. Therefore, in some implementations, the pump may be positioned or extended upwards from the column 70 to retain access to air even if the main body of the rig 10 itself is submerged.

The column 70 is also provided with an upwards facing solar (photovoltaic) panel 56 which is used to provide power to the onboard control system(s) of the rig 10 (the onboard control system(s) are not shown in Figure 4, but are typically located within the central column 70). In some implementations, the solar panel may be sized and configured to provide 2-3 Kw of power under normal illumination conditions; this level of power is generally able to support the electrical and electronic operations of the rig 10, including the water pump 54, the air pump, the sensors, the communications/telemetry system 52 and the on-board control systems.

The column 70 is further provided with one or more integrated, rechargeable battery systems 58. These battery systems receive power from the solar panel 56 and store the received power, so that the rig 10 remains powered, even it is dark or the light levels are otherwise too low to support the production of useful power by the solar panel 56. In the implementation shown in Figure 4, the battery systems are located towards the bottom of the column 70, below the disks 20. In this position, the battery systems 58 act as a form of counterweight. For example, if a wave were to strike the disks 20 to generally tip the rig 10 sideways, the relatively heavy battery system 58 will tend to sink back downwards, thereby acting to return the rig 10 to its normal upright position such as shown in Figure 4.

Like the antenna 52 and air pump, the solar panel 56 is generally located above the surface of the water to receive solar radiation. Therefore, in some implementations, the solar panel 56 may be positioned or extended upwards from the column 70 to retain access to this solar radiation even if the main body of the rig 10 itself is submerged. In some implementations, the rig 10 may be provided with a separate surface module accommodating the antenna 52, the air pump and/or the solar panel 56. The module may potentially detach from (but still be tethered to) the rig when the rig submerges, thereby allowing the module components to remain on the surface of the water.

It will be noted however that the antenna, air pump and/or solar panel may only need access to the surface on an intermittent basis. For example, there may be specified (scheduled) timings for data communications with the control station. In this case, data acquired by the rig 10 may be buffered in the onboard control system(s) until the next scheduled data communication with the control station. Likewise, the solar panels may be submerged in low lighting conditions, such as night-time, without significant loss of functionality. The air pump might also be submerged in low light conditions, since the rate of photosynthesis, and hence the consumption of carbon dioxide, is likewise low in these conditions. Accordingly, the rig 10 may be able to accommodate periods of submergence for the air pump, antenna 52 and/or solar panels if the rig is configured to operate in this manner.

The rig 10 such as described herein for cultivating seaweed acts as a hydrostatic cultivation rig, whereby having the pipes in expanded form provides increased rigidity and resilience to the overall structure and framework of the rig 10. The tubing (pipes 35) of the rig 10 further supports the integrated supply of air and water across the seaweed growing area of the disks, with the air from the air pump being used to aerate the water provided by the water pump 54. Accordingly, the water pressure generated by the water pump 54 is used both to (i) maintain the pipes 35 in an expanded form, and hence to maintain the rig 10 itself in expanded form; and (ii) provide a flow of nutrients and air (carbon dioxide) to the growing seaweed.

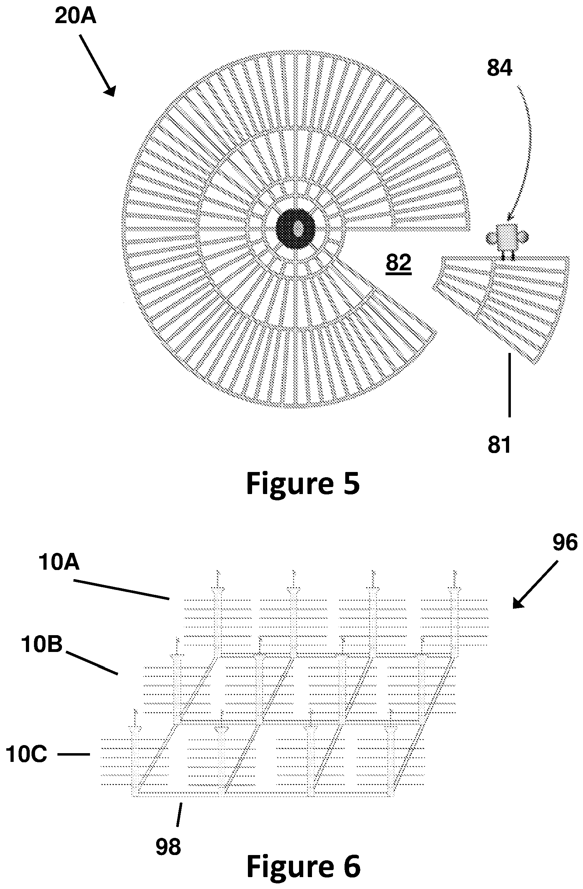

Figure 5 is a schematic representation of an example of a disk included in the rig shown in Figure 1, similar to the rig shown in Figure 1 but with some additional functionality, in that the disk 20Amis split into azimuthal sections (segments or sectors), corresponding for example to about 30 degrees of azimuthal rotation about the longitudinal axis of the disk. As shown in Figure 5, such a segment 81 may be removable from the disk, typically by withdrawing the segment in a radial direction to leave a vacant site 82. Conversely, another segment may be brought up and inserted into the disk 20A to (re)occupy site 82.

In the example of Figure 5, it is assumed that the segment 81 includes all layers (disks 20) have a particular azimuthal range, in other words, the segment extends from the top of the rig to the bottom of the rig in terms of stacked disks. In other implementations, it may be possible for a segment to represent an azimuthal (circumferential) range within a single layer or disk 20A. In this case, the sections of disks which are located above or below the segment 81 to be removed may be retained in the rig 10 and can be removed separately from segment 81.

Note that in the implementation shown in Figure 5, the segment 81 comprises the outer two regions (rings) H3, H4, which are typically used to provide the main growing surface for the seaweed being cultivated. By comparison, the two inner regions, H1 and H2, which are relatively small, do not form part of the segment 81, but rather are retained around the central column 70. The inner regions H1 and H2 may be used to provide an interface to allow a segment 81 to be inserted into the disk 20A to occupy the site. For example, such an interface may provide a mechanical mating to hold the segment 81 in an appropriate position, and this mating may in turn provide one or more fluid connections to allow the water pump 54 to pump water through regions H1 and H2 into regions H3, H4 of the segment 81.

Once segment 81 has been detached from the disk 20, it no longer receives the water flow from water pump 54. Accordingly, the segment 81 will start to contract as the inner wall 44 elastically narrows to expel water from the pipes 35 (for ease of representation, this contraction is not shown in Figure 5). Note that if the detached segment 81 has been removed because the segment is now fully occupied by cultivated seaweed and is ready for harvesting, the presence of the seaweed entwined with the pipes 35 of disk 20A may at least partly resist this contraction.

The general operation of the rig 10 may involve removing one or more segments 81 that are fully occupied by cultivated seaweed. A new segment can then be introduced into a vacant slot 82 caused by the detachment of a segment 81. Spore from seaweed growing elsewhere on disk 20A (or more generally within rig 10, or other close-by rigs) will spread onto the newly inserted segment and start growing there as a form of self-seeding. In some cases, rather than segment 81 being removed for harvesting, the segment 81 may be detached to move the segment to another position in the rig 10 (or in another rig) whereby relatively mature seaweed from segment 81 may stimulate new growth of seaweed in segments located close to the new position of segment 81.

In some implementations, the movement of segments for harvesting and/or for spreading spores and self-seeding may be managed remotely, for example from an on-shore control station, and/or automatically. In the latter option, an on-board control system of the rig may be programmed to identify segments that should be moved, e.g. because they contain seaweed which is ready to be harvested, or because they are to be located next to a new segment to support self-seeding.

Figure 5 shows in schematic form a robot 84 being utilised for this purpose of moving segments between different locations (such as to a new rig, a new disk, or a new position within a disk). The robot 84 may therefore include, inter alia, a motor or engine for movement around a rig 10, or between rigs, and arms or similar mechanical devices for holding and positioning a segment 81 that is being moved. The operations of the robot 84 may be managed from a remote control station and/or based on some level of local automation within the robot itself.

Figure 6 is a schematic representation showing an example of an array 96 of rigs 10, where each rig may be implemented as described above. The array of rigs allows the cultivation of seaweed to be scaled up to a much greater level than can be accomplished using only a single rig. In this respect, the array 96 of Figure 6 comprises 12 rigs, of which three are labelled 10A, 10B and 10C. However, other implementations of the array 96 may include fewer or more (potentially many more) rigs 10A, B, C than 12. Furthermore, Figure 6 shows a homogeneous set of rigs arranged in a rectangular grid of the array 96. However, in other implementations of an array 96, the rigs of the array may differ from one another and/or they may be arranged in any appropriate configuration. Having the rigs arranged and retained in an array 96 helps to maintain the rigs together in a relatively high concentration to help support growing a high yield of seaweed with good efficiency.

The array 96 shown in Figure 6 is in the form of a rectangular grid comprising two orthogonal sets of lines 98. The rigs are located at the intersections between the two orthogonal sets of lines, which can help to maintain the rigs in a desired position. Rigs may also be located at the corners of the grid. The lines 98 used to form the array may comprise ropes, chains, or any other suitable form of connector. The intersections (and corners) of the grid may be provided with a hole or other form of fixing (not shown in Figure 6) to engage with and retain the central column 70 of the rig 10 which is to be located at that intersection. Having the rigs positioned at the intersections of the two orthogonal sets of lines helps to retain the rigs in the desired pattern with suitable spacings from one another. In some implementations, the array 96 may be tethered to the sea (ocean) floor to help ensure the array 96 remains in the desired location. It is generally easier to attach the rigs 10 to a tethered array 96 than to tether each rig 10 individually to the sea floor.

In some implementations, the array 96 may provide one or more shared facilities to the rigs. For example, the array may have its own array of solar panels and the lines 98 might then be used to supply power from the solar panels to the individual rigs. With this approach, the rigs 10 might be formed without any solar panels (or with smaller panels to provide power when the rig 10 is not incorporated into the array 96). The array 96 may provide one or more other shared facilities, for example in relation to communications, on-board control systems, and air/water pumping facilities (in addition to or instead of having shared solar panels). In some implementations, the utilisation of a shared resource (such as power) may be implemented over lines 98 which are also used for positioning the rigs within the array. For example, the lines 98 may be supplemented by electrical cable for supplying power to the rigs 10 from a shared solar power facility. In other implementations however, lines 98 of the array 96 may only provide positioning of the rigs, and individual rigs are then responsible for providing their own resources, such as power and communications (as described above with reference to Figure 4 for a single rig).

Overall, the rig 10 disclosed herein provides a flexible and adjustable platform for the cultivation of seaweed with high yield. The rig 10 may be remotely monitored and managed, and may also support self-positioning. The use of a hydrostatic system (analogous to an expandable garden hose) to support the structure of the rig 10 allows integration of air and water supply throughout the growing area, and may also be used to support flow, buoyancy and rigidity.

A hydrostatic cultivation rig as described herein may provide a modular system that helps to support automated harvesting, such as by using a robot system 84. The use of removable modules (such as segment 81) helps to provide easier maintenance and supports self seeding, in which mature spore move to unseeded rigs (or segments thereof). This segmented (modular) design also supports easier access to the internals of the rig 10, as well as to all areas of the segment 81 itself (such as for maintenance purposes). The modular design also enables segment repositioning such as described above. This movement of rig modules may in some implementations be performed using a marine robot (farmbot) 84 to help with automated maintenance of the rig 10 and automated harvesting.

The use of an array 96 in which the rigs 10 are attached to the array and the array 96 may then be fastened (moored) to the seabed generally involves fewer moorings (compared with having each rig individually moored to the seabed). This can help to lower costs and also reduces the environmental impact of the seaweed cultivation on the seabed. Furthermore, the array 96 of rigs 10 may provide a new habitat for life within the seas.

## Claims

1. A rig for cultivating seaweed, the rig comprising:
a pump; and
a disk formed at least in part from expandable pipes;
wherein the pump is configured, in operation, to provide a flow of water through the expandable pipes such that the expandable pipes maintain an expanded condition to create a framework for supporting seaweed under cultivation on the rig.

2. The rig of claim 1, wherein each of the expandable pipes comprises an inner wall and an outer wall, wherein the inner wall comprises an elastic material for containing the flow of water, optionally wherein the outer wall is substantially inelastic.

3. The rig of claim 2, wherein for a non-expanded condition, the outer wall is located loosely around the inner wall, and for the expanded condition, the inner wall pushes directly outwards against the outer wall.

4. The rig of any preceding claim, wherein for the expanded condition, the rig includes spaces between the pipes which contribute to the framework for supporting seaweed under cultivation on the rig.

5. The rig of any preceding claim, wherein the expandable pipes are configured such that at least some of the flow of water from the expandable pipes is directed past the seaweed to supply nutrient and/or aeration to the seaweed.

6. The rig of any preceding claim, wherein the pump draws the water to flow through the expandable pipes from beneath the rig, preferably from a depth at which there is a greater concentration of nutrients and/or carbon dioxide compared with at the depth of the disk.

7. The rig of any preceding claim, further comprising an air pump for aerating water to be received by the seaweed under cultivation on the rig, optionally in which the air pump is configured to aerate the flow of water through the expandable pipes which is then directed past the seaweed.

8. The rig of any preceding claim, further comprising a central column which in use has a substantially vertical orientation, and wherein the disk is attached to or mounted on the central column.

9. The rig of any preceding claim, wherein the central column includes or supports at least one or more of: a telemetry system; a radio communications system; a global positioning system; at least one solar panel; at least one battery which is preferably rechargeable from the at least one solar panel; and/pr at least one on-board control system.

10. The rig of any preceding claim, wherein the disk has a modular construction comprising multiple sectors, whereby a sector can be individually inserted into or removed from the disk.

11. The rig of any preceding claim, wherein the rig includes a stack of two or more axially aligned disks, typically between two and twelve disks, typically between three and ten disks.

12. An array comprising multiple rigs of any preceding claim, wherein the rigs are attached to one another within the array.

13. The array of claim 12, wherein the array comprises a rectangular grid of lines, and wherein the rigs are located at intersections of lines within the grid.

14. The array of claim 12 or 13, wherein the array is configured for tethering to the sea bed, preferably wherein the number of moorings used to perform such tethering is less than the number of rigs within the array.

15. A method of operating a rig for cultivating seaweed, the rig comprising a pump and a disk formed at least in part from expandable pipes, said method comprising operating the pump to:
maintain the pipes in an expanded condition, by providing water from the pump, when supporting seaweed under cultivation on the rig; and
maintain the pipes in an unexpanded condition, by not providing water from the pump, when performing at least one of transporting, installing and/or storing the disk,
optionally further comprising one or more of:
directing water which has passed through the pipes to pass by the seaweed under cultivation, optionally further comprising using the water which is directed to pass by the seaweed under cultivation to provide nutrients and/or aeration to the seaweed; and/or
locating an empty portion of a rig close to a portion of a rig with mature seaweed to support self-seeding of the empty portion of the rig.

## Patentansprüche

1. Gestell zum Kultivieren von Algen, wobei das Gestell Folgendes umfasst:
eine Pumpe; und
eine Scheibe, die mindestens teilweise aus ausdehnbaren Rohren ausgebildet ist;
wobei die Pumpe dazu konfiguriert ist, im Betrieb einen Wasserstrom durch die ausdehnbaren Rohre bereitzustellen, sodass die ausdehnbaren Rohre einen ausgedehnten Zustand aufrechterhalten, um ein Gerüst zum Unterstützen von Algen, die auf dem Gestell kultiviert werden, zu schaffen.

2. Gestell nach Anspruch 1, wobei jedes der ausdehnbaren Rohre eine Innenwand und eine Außenwand umfasst, wobei die Innenwand ein elastisches Material zum Halten des Wasserstroms umfasst, wobei die Außenwand optional im Wesentlichen unelastisch ist.

3. Gestell nach Anspruch 2, wobei sich die Außenwand für einen nicht ausgedehnten Zustand lose um die Innenwand herum befindet und die Innenwand für den ausgedehnten Zustand direkt nach außen gegen die Außenwand drückt.

4. Gestell nach einem vorhergehenden Anspruch, wobei für den ausgedehnten Zustand das Gestell Räume zwischen den Rohren enthält, die zu dem Gerüst zum Unterstützen von Algen, die auf dem Gestell kultiviert werden, beitragen.

5. Gestell nach einem vorhergehenden Anspruch, wobei die ausdehnbaren Rohre derart konfiguriert sind, dass mindestens ein Teil des Wasserstroms aus den ausdehnbaren Rohren an den Algen vorbeigeleitet wird, um den Algen Nährstoff und/oder Belüftung zuzuführen.

6. Gestell nach einem vorhergehenden Anspruch, wobei die Pumpe das Wasser ansaugt, sodass es durch die ausdehnbaren Rohre von unterhalb des Gestells strömt, vorzugsweise aus einer Tiefe, in der eine höhere Konzentration an Nährstoffen und/oder Kohlendioxid im Vergleich zu der Tiefe der Scheibe vorliegt.

7. Gestell nach einem vorhergehenden Anspruch, ferner umfassend eine Luftpumpe zum Belüften von Wasser, das durch die Algen, die auf dem Gestell kultiviert werden, aufzunehmen ist, wobei die Luftpumpe optional dazu konfiguriert ist, den Wasserstrom durch die ausdehnbaren Rohre zu belüften, der dann an den Algen vorbeigeleitet wird.

8. Gestell nach einem vorhergehenden Anspruch, ferner umfassend eine zentrale Säule, die bei Verwendung eine im Wesentlichen vertikale Ausrichtung aufweist, und wobei die Scheibe an der zentralen Säule befestigt oder daran montiert ist.

9. Gestell nach einem vorhergehenden Anspruch, wobei die zentrale Säule mindestens eines oder mehrere von Folgendem enthält oder unterstützt: ein Telemetriesystem; ein Funkkommunikationssystem; ein globales Positionierungssystem; mindestens ein Solarpanel; mindestens eine Batterie, die vorzugsweise von dem mindestens einen Solarpanel wiederaufladbar ist; und/oder mindestens ein integriertes Steuersystem.

10. Gestell nach einem vorhergehenden Anspruch, wobei die Scheibe einen modularen Aufbau aufweist, der mehrere Sektoren umfasst, wodurch ein Sektor einzeln in die Scheibe eingefügt oder aus dieser entfernt werden kann.

11. Gestell nach einem vorhergehenden Anspruch, wobei das Gestell einen Stapel aus zwei oder mehr axial ausgerichteten Scheiben enthält, typischerweise zwischen zwei und zwölf Scheiben, typischerweise zwischen drei und zehn Scheiben.

12. Anordnung, umfassend mehrere Gestelle nach einem vorhergehenden Anspruch, wobei die Gestelle innerhalb der Anordnung aneinander angebracht sind.

13. Anordnung nach Anspruch 12, wobei die Anordnung ein rechteckiges Gitter aus Linien umfasst und wobei sich die Gestelle an Schnittpunkten von Linien innerhalb des Gitters befinden.

14. Anordnung nach Anspruch 12 oder 13, wobei die Anordnung zum Anbinden an den Meeresboden konfiguriert ist, wobei vorzugsweise die Anzahl von Festmachplätzen, die zum Durchführen eines solchen Anbindens verwendet werden, geringer ist als die Anzahl von Gestellen innerhalb der Anordnung.

15. Verfahren zum Betreiben eines Gestells zum Kultivieren von Algen, wobei das Gestell eine Pumpe und eine Scheibe umfasst, die mindestens teilweise aus ausdehnbaren Rohren ausgebildet ist, wobei das Verfahren Betreiben der Pumpe zu Folgendem umfasst:
Aufrechterhalten der Rohre in einem ausgedehnten Zustand, indem Wasser von der Pumpe bereitgestellt wird, wenn Algen, die auf dem Gestell kultiviert werden, unterstützt werden; und
Aufrechterhalten der Rohre in einem nicht ausgedehnten Zustand, indem kein Wasser von der Pumpe bereitgestellt wird, wenn mindestens eines von Transportieren, Installieren und/oder Lagern der Scheibe durchgeführt wird,
optional ferner umfassend eines oder mehrere von Folgenden:
Leiten von Wasser, das durch die Rohre geströmt ist, sodass es an den Algen, die kultiviert werden, vorbeiströmt, optional ferner umfassend Verwenden des Wassers, das so geleitet wird, dass es an den Algen, die kultiviert werden, vorbeiströmt, um den Algen Nährstoffe und/oder Belüftung bereitzustellen; und/oder
Anordnen eines leeren Abschnitts eines Gestells in der Nähe eines Abschnitts eines Gestells mit reifen Algen, um die Selbstaussaat auf dem leeren Abschnitt des Gestells zu unterstützen.

## Revendications

1. Appareil destiné à cultiver des algues, l'appareil comprenant :
une pompe ; et
un disque formé au moins en partie de tuyaux dilatables ;
dans lequel la pompe est conçue, lors du fonctionnement, pour fournir un écoulement d'eau à travers les tuyaux dilatables de sorte que les tuyaux dilatables maintiennent un état dilaté pour créer un cadre destiné à supporter des algues en culture sur l'appareil.

2. Appareil de la revendication 1, dans lequel chacun des tuyaux dilatables comprend une paroi interne et une paroi externe, dans lequel la paroi interne comprend un matériau élastique destiné à contenir l'écoulement d'eau, éventuellement dans lequel la paroi externe est sensiblement non élastique.

3. Appareil de la revendication 2, dans lequel, pour un état non dilaté, la paroi externe est située de manière lâche autour de la paroi interne, et pour l'état dilaté, la paroi interne pousse directement vers l'extérieur contre la paroi externe.

4. Appareil d'une quelconque revendication précédente, dans lequel, pour l'état dilaté, l'appareil comprend des espaces entre les tuyaux qui contribuent au cadre destiné à supporter des algues en culture sur l'appareil.

5. Appareil d'une quelconque revendication précédente, dans lequel les tuyaux dilatables sont conçus de sorte qu'au moins une partie de l'écoulement d'eau à partir des tuyaux dilatables est dirigée par delà les algues pour fournir un nutriment et/ou de l'aération aux algues.

6. Appareil d'une quelconque revendication précédente, dans lequel la pompe aspire l'eau pour qu'elle s'écoule à travers les tuyaux dilatables à partir d'en dessous de l'appareil, de préférence à partir d'une profondeur à laquelle il y a une plus grande concentration de nutriments et/ou de dioxyde de carbone par rapport à la profondeur du disque.

7. Appareil d'une quelconque revendication précédente, comprenant en outre une pompe à air destinée à aérer de l'eau devant être reçue par les algues en culture sur l'appareil, éventuellement dans lequel la pompe à air est conçue pour aérer l'écoulement d'eau à travers les tuyaux dilatables qui est ensuite dirigé par delà les algues.

8. Appareil d'une quelconque revendication précédente, comprenant en outre une colonne centrale qui, lors de l'utilisation, présente une orientation sensiblement verticale, et dans lequel le disque est fixé ou monté sur la colonne centrale.

9. Appareil d'une quelconque revendication précédente, dans lequel la colonne centrale comprend ou supporte au moins un ou plusieurs parmi : un système de télémétrie ; un système de radiocommunication ; un système de positionnement global ; au moins un panneau solaire ; au moins une batterie qui est de préférence rechargeable à partir de l'au moins un panneau solaire ; et/ou au moins un système de commande embarqué.

10. Appareil d'une quelconque revendication précédente, dans lequel le disque présente une construction modulaire comprenant de multiples secteurs, moyennant quoi un secteur peut être individuellement inséré dans le disque ou retiré de celui-ci.

11. Appareil d'une quelconque revendication précédente, dans lequel l'appareil comprend un empilement de deux disques alignés axialement ou plus, typiquement entre deux et douze disques, typiquement entre trois et dix disques.

12. Réseau comprenant de multiples appareils d'une quelconque revendication précédente, dans lequel les appareils sont fixés les uns aux autres au sein du réseau.

13. Réseau de la revendication 12, dans lequel le réseau comprend une grille rectangulaire de lignes, et dans lequel les appareils sont situés à des intersections de lignes au sein de la grille.

14. Réseau de la revendication 12 ou 13, dans lequel le réseau est conçu pour être attaché au fond de la mer, de préférence dans lequel le nombre d'amarrages utilisés pour réaliser une telle attache est inférieur au nombre d'appareils au sein du réseau.

15. Procédé d'exploitation d'un appareil destiné à cultiver des algues, l'appareil comprenant une pompe et un disque formé au moins en partie de tuyaux dilatables, ledit procédé comprenant l'exploitation de la pompe pour :
maintenir les tuyaux dans un état dilaté, en fournissant de l'eau à partir de la pompe, lors du support d'algues en culture sur l'appareil ; et
maintenir les tuyaux dans un état non dilaté, en ne fournissant pas d'eau à partir de la pompe, lors de la réalisation de l'un parmi un transport, une installation et/ou un stockage du disque,
comprenant en outre éventuellement un ou plusieurs parmi :
la direction d'eau qui a traversé les tuyaux pour passer par les algues en culture, comprenant en outre éventuellement l'utilisation de l'eau qui est dirigée pour passer par les algues en culture pour fournir des nutriments et/ou de l'aération aux algues ; et/ou
la localisation d'une partie vide d'un appareil à proximité d'une partie d'un appareil avec des algues matures pour supporter un auto-ensemencement de la partie vide de l'appareil.
